Europäisches Patentamt

European Patent Office

Office européen des brevets

(11) Publication number: **0 039 718**
**B1**

## (12) EUROPEAN PATENT SPECIFICATION

(45) Date of publication of patent specification: 02.05.85

(51) Int. Cl.⁴: **G 01 N 15/06, G 01 N 21/85**

(21) Application number: 80902249.4

(22) Date of filing: 21.11.80

(86) International application number:
PCT/SE80/00295

(87) International publication number:
WO 81/01467 28.05.81 Gazette 81/13

(54) **METHOD AND APPARATUS FOR DETERMINING THE CONCENTRATION OF A SUBSTANCE CONTAINED IN PARTICLES CARRIED BY A FLOWING MEDIUM.**

(30) Priority: 22.11.79 SE 7909651

(43) Date of publication of application:
18.11.81 Bulletin 81/46

(45) Publication of the grant of the patent:
02.05.85 Bulletin 85/18

(84) Designated Contracting States:
DE FR GB

(56) References cited:
DE-B-2 004 087
SE-B- 387 172
SE-B- 405 171

(73) Proprietor: SVENSKA
TRÄFORSKNINGSINSTITUTET
Drottning Kristinas väg 37 F, 53-69
S-114 28 Stockholm (SE)

(72) Inventor: FLADDA, Gerdt
58 Parkvägen
S-183 51 Täby (SE)
Inventor: KUBULNIEKS, Egils
60 Hökmossevägen
S-126 42 Hägersten (SE)
Inventor: PETTERSSON, Torulf
147 Marknadsvägen
S-183 34 Täby (SE)

(74) Representative: Onn, Thorsten et al
AB Stockholms Patentbyra Zacco & Bruhn P.O.
Box 3129
S-103 62 Stockholm (SE)

Courier Press, Leamington Spa, England.

## Description

This invention relates to methods and apparatus of the kinds referred to in the preambles of the accompanying claims 1 to 4.

The present invention is the result of efforts to find a simple and reliable method of obtaining a measured value, which has a well-defined relation to the so-called kappa number, which is a measure of the lignin content of wood fibres. When the method had been developed, however, it was found to have a much wider field of application. The method is well suited for determining the content of substances in particles, where the substance in question is radiation absorbing for predetermined radiation wavelength band and can be regarded as if it was placed as a thin layer on the surface of a particle, the surface of which bordering on the layer is reflecting for a radiation wavelength range, within which the radiation wavelength band in question is contained. The substance in question may be a thin layer, but it is also possible to use the method when the substance is distributed as in varying local concentrations within the particles. The method thereby also can be used, for example, for brightness determination or colour measurement on suspended particles, for surface structure examination of different substances on suspended particles, for studies of surface coating on suspended particles, etc.

During the preparation of cellulose pulp for paper manufacture the pulp is analysed with respect to its content of residue lignin after the preparation. The lignin content of the prepared pulp heretofore has been determined by taking pulp samples for chemical analysis. It then was determined how much chlorine or potassium permanganate a predetermined amount of pulp consumes on oxidation. These chemical analyses are relatively complicated and time-consuming. Moreover, they cannot be carried out on-line during the process.

It is already known, e.g. from SE—B—405 171, to measure the total concentration by volume of suspended material by the methods and apparatus of the kind referred to in the preambles of claims 1 to 4. However, said prior art does not disclose the measuring of the content of a particular substance in particles carried by a flowing medium. By use of the invention it will now be possible to measure the content of the substance in particles. Hereby the concentration of substances in particles can be determined in a more simple way than before.

To this end the methods and apparatus according to the invention have the characterizing features defined in the accompanying claims 1 to 4. The method can be carried out on-line automatically at short intervals. It can be initiated from a control room spaced from the place where the pulp manufacture proper takes place. Experiments carried out with the method indicated good correlation with the values resulting from more or less direct methods being used at present, such as the kappa number method and the chlorine number method.

The wood, from which the pulp is made, is built up of different cells joined together by lignin. In the manufacture of cellulose pulp, for example according to the sulphate method in which the wood chopped up into chips is digested under pressure at high temperature, the wood is subjected to a treatment for exposing the individual fibres and dissolving the lignin. The lignin remaining in the pulp after this treatment can be regarded as if existing only as a thin layer on the surfaces of each fibre. This does not fully agree with reality, but the lignin content in each fibre is substantially higher at the surfaces than at the core of the fibre. Lignin was on examination found to be strongly absorbing for ultraviolet light, while the material, of which the core in each fibre largely consists, is reflecting for these wavelengths of the light. The present invention makes use of this circumstance.

The invention is described in greater detail in the following, with reference to the accompanying drawing, in which Fig. 1 is a basic sketch of a measuring device arranged in agreement with the principles of the invention. Fig. 2 shows the behaviour of the incident light for a cross-section of a fibre, and Fig. 3 shows a special diaphragm used.

The method and apparatus of the invention will first be described for the case in which the concentration $konc_A$ of a substance in particles carried by a flowing medium in which the substance does not dissolve, said substance being distributed in varying concentrations within the particles with some other material, the said substance absorbing radiation in a predetermined wavelength range and said other material reflecting radiation in said predetermined range.

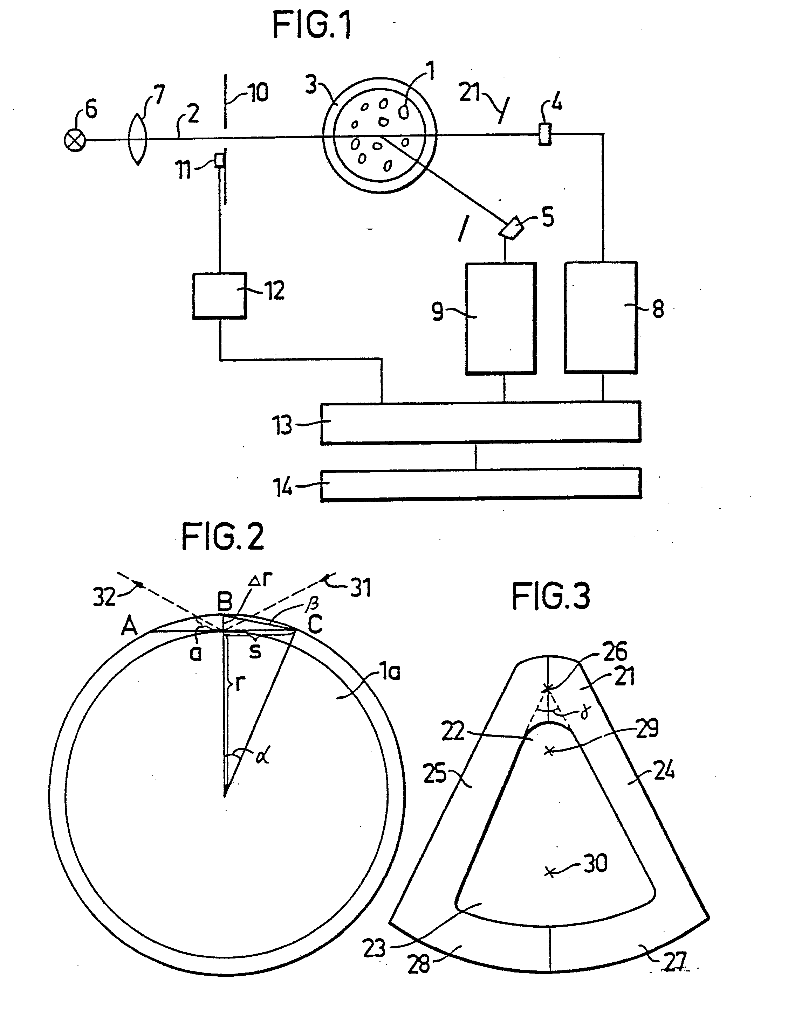

In the embodiment shown in Fig. 1, fibre material 1 suspended in water is illuminated by ultraviolet light in a narrow beam 2 from a light source 6 which for instance is a mercury lamp. The suspended fibre material 1 flows with a high degree of turbulence through a tube 3. Two detectors 4, 5 are located on the opposite side of the tube 3 from the light source 6 provided with an associated optical unit 7 for producing the beam 2. One detector 4 is located so that it is influenced substantially only by light passing straight through the suspension. The second detector 5 is located so as to be effected only by light which is scattered by one or more of the particles in the suspension.

The light meeting the first detector 4 can with good approximation be said to have passed through the suspension in such a manner, that the radiation has not interacted with any part of any fibre. The light meeting the second detector 5, however, always has been reflected and thereby scattered by at least one fibre. The suspension should be so diluted that the probability is low that the light is reflected by several fibres before reaching the detector.

As the light source 6 delivers a substantially constant known light flux incident on the suspension, light scattering from the particles implies that an increase in intensity of the scattered light corresponds to a proportionally equal decrease in intensity of the light flux passing straight through the suspension. When no light is absorbed by the particles in the suspension, but the particles are entirely reflecting, the effect of a change in particle concentration on the intensity of the scattered light is equal and opposite to the effect of said change on the intensity of the light passing straight through the suspension.

When the liquid itself, in which the particles are suspended, is absorbent to some extent, the radiation to the two detectors 4, 5 is affected equally, if the paths of the light through the suspension to the two detectors are of equal length.

When absorption does not occur in the particles themselves nor in the liquid in which they are suspended, the intensity $I_s$ of the total scattered light and the intensity $I_r$ of the light passing straight through is equal to the intensity $I_o$ of the incident light, i.e.

$$I_s/I_r = (I_o - I_r)/I_r = (I_o/I_r) - 1 \qquad (1)$$

When now the particles carry a layer of light-absorbing lignin, the term $I_s$ is affected, but not the term $I_r$ since this term is dependent only on the concentration of the material suspended in the medium. The equation (1) is not valid any longer. Due to the light absorption on reflection at the surface of the fibres in the suspension, the light intensity scattered to the second detector 5 is partially reduced, while the light reaching the first detector 4 is not influenced by the effect of the surface layer on the fibres.

The lignin is not actually in the form of a thin layer on the surface of a fibre, but rather has the form of local density variations within the fibres. However, for obtaining the equations on which the invention is based, the layer state of the lignin is assumed to apply with good approximation. It is also assumed that every fibre has a substantially circular-cylindrical or spherical shape. The sample is arranged to flow with complete turbulence, in order to eliminate the influence of the shape and orientation of the fibres on the measurement result.

On illumination perpendicularly to the flow direction, the light meeting a particle passes through a portion of a circle segment with the height $\Delta r$ of an annular cross-section of the particle consisting of the lignin layer, before the light meets the particle surface actually reflecting the light, whereafter the light again travels through an equal length path through the lignin layer.

Fig. 2 is a cross-sectional view of a fibre 1a and shows the circle segment ABC with the thickness $\Delta r$, through which the incident light 31 and the reflected light 32 at a certain angle of incidence pass through the distance 2a. The lowest value, which the distance $a$ can assume, is $\Delta r$ (see Fig. 2), where the light flows radially. The highest value, which the distance $a$ can assume is $s = (r + \Delta r) \sin \alpha$, where the light flows tangentially toward the surface of the fibre core. Since the angle $\beta = \alpha/2$

$$\sin \alpha = 2\Delta r \, s/(s^2 + \Delta r^2) = s/(r + \Delta r)$$

$$s^2 = 2r\Delta r + \Delta r^2$$

$$\Delta r \ll r \text{ giving } s^2 \approx 2r \, \Delta r$$

Thus, $s \approx \sqrt{2r \, \Delta r} \sim \Delta r^{1/2}$ when r is considered constant.

Thereby the distance 2a, through which the light passes through the lignin layer, is obtained between the limits

$$2\Delta r < 2a < 2\sqrt{2r\Delta r}$$

i.e. when r is assumed constant (equal fibre size), then

$$2a \sim \Delta r^k$$

where

$$1/2 < k < 1.$$

The quotient between scattered light and light passing straight through the sample then is

$$I_s/I_r = ((I_o/I_r) - 1) \exp (-\mu \, k_i \, \Delta r^k) \qquad (2)$$

where $\mu$ is an optical constant dependent on the material (lignin), and $k_i$ is a constant dependent on the particle size. The exponential function is obtained by applying the Lambert-Beer law. Irrespective of whether the particles are spherical or oblong, the amount of absorbing material per particle is proportional to $\Delta r$, provided that the sample on which the measurement is carried out has a substantially constant composition of homogeneous material particles. Thereby the concentration of lignin, $konc_A$ is:

$$konc_A \sim \Delta r \sim \left\{ 1n \left[ \frac{(I_o/I_r) - 1}{I_s/I_r} \right] \right\}^{1/k} \qquad (3)$$

This equation is not fully in agreement with practice, but certain adjustments are to be made since $I_s$ is not, practically, absolutely zero for clear water. Measurements of the intensities are performed by photodetectors and photoamplifiers having certain efficiencies and amplification factors. This has to be considered. At comparative measurements of cellulose pulp with varying kappa number the following equation has proved to yield a good correlation between measurement results obtained with the method according to the invention and measurement results obtained in conventional manner.

$$konc_A = A' \left\{ \ln \left[ \frac{c'_3((I_{o1}/I_r)-1)}{((I_s/I_r)-c'_1)^{c'_2}} \right] \right\}^{1/k'} \quad (4)$$

where $I_{o1}$ is the intensity of the incident radiation, $I_r$ is the intensity of the radiation transmitted straight through the medium, $I_s$ is the intensity of the detected scattered radiation, $k'$ is a constant between 1/2 and 1 selected in dependence on the predetermined detection angle for the scattered radiation, $A'$ is proportionalization constant, $c'_1$ is a constant dependent on the dimensions of the measuring instrument and established by measurement of clear water giving $c'_1=I_s/I_r$ (clear water), $c'_2$ is a constant obtained by the measurement of two or more calibration suspensions with the same kappa number but different concentrations of suspended particles and selected so that $konc_A$ is independent of concentration variations of suspended particles, and $c'_3$ is a constant selected so that $konc_A=o$ when there is no absorption by suspended particles.

The detector 5, however, is not arranged so that it receives all light scattered by the particles in the suspension. The detector is, instead, positioned to receive only the light scattered in a particular direction. Thereby, the constant $k'$ in the equation (4) is depending on the angular location of the detector 5, which indicates the scattered light, because the reflection angle for the reflection against the particles is approximately defined thereby.

For every angle, at which a particle is met by light, the light scattered to the detector 5 located at a certain angular position with some probability is a definite fraction of the entire scattered light flow. This implies that the light intensity detected by the detector 5 can be expected to be $b \cdot I_s$, where b is a constant smaller than 1. Consequently, the light arriving at the detector 5 can be expected to be a definite fraction of all scattered light damped as if it had been scattered at an entirely definite angle by the particles in the suspension.

The constant $k'$, of course, can be calculated, but for a particular arrangement with tube, light source and detectors $k'$ is most simply determined by comparative examination according to chemical methods on several samples, which also are fed through the tube.

In the foregoing was assumed throughout that all fibres in a sample have substantially the same appearance and the same size, whereby the radius r and the volume of the lignin layer are equal for all fibres and can be regarded as constant factors. In reality, however, the situation is not quite so ideal. The fibres in a sample have varying sizes. The thickness $\Delta r$ of the lignin layer depends on the size of the individual fibre, i.e. on the radius r. the concentration of lignin in a sample in relation to the pulp concentration is related to the fibre size. It has been found possible, however, in spite of varying size distribution of the fibre material, to measure on the basis of the above equation (4) when the optical unit is so designed that the ratio of increase of the signal from the detector 5 and decrease of the signal from the detector 4 is equal for small as well as large particles.

In Fig. 3 a diaphragm 21 is shown for location between the tube and the detectors on the output side. Said diaphragm 21 is fan-shaped, and its pointed portion 22 is located so that the straight ray path to the detector 4 passes through this portion. The wider portion 23 of the diaphragm is located so that the scattered ray path to the detector 5 passes through this portion. The angle γ at the tip can be adjusted, in that the lateral pieces 24, 25 of the diaphragm 21 are hinged one to the other and rotatable about a centre 26. The lateral pieces 24, 25 at the wider portion 23 of the diaphragm are provided with end pieces 27, 28, which are angularly movable relative to one other, and the diaphragm edges of which are arcs with the centre in 26. One end piece 27 is located with respect to the other one 28, so that they can be moved toward and away from each other to change the angle γ.

At 29 and 30 the positions inside the diaphragm are marked, through which the two straight lines from the centre of the tube extend to the detectors 4 and 5. The diaphragm shown provides a simple structure, which serves its purpose in practice. Other designs, for example elliptic shape or a design having two openings or the like, however, can yield a similar result. The essential feature is that the diaphragm functions such that any increase in the scattered light signal due to different particle sizes is matched by an equal decrease in the "straight-through" light signal.

The signals from the two detectors 4, 5 are fed to respective circuits 8, 9 which carry out analog-to-digital conversion and indicate the mean level of the signal during a predetermined period. This period preferably is longer than approximately 10 seconds. On a diaphragm 10 for the incident beam 2 a further detector 11 is provided to detect the incident light. In the ideal case, as mentioned, the sample is illuminated by a light source producing a constant light flux. This condition cannot be met when the sample is to be illuminated by ultraviolet light, and the measuring instrument is to be held within reasonable costs. The reference detector 11, therefore, is provided in order to continuously detect variations in light intensity of the light from the light source 6 and to adjust measurement results in correspondance with these variations.

The output signal from the detector 11 is fed to an analog-to-digital converter 12 similar to circuits 8 and 9. The outputs from the units 8, 9 and 12 are coupled to inputs on a calculating unit 13, which carries out the calculation according to the above equation (4) and displays the calculation result on a display 14. The calculation unit may be a microprocessor. Calculation is carried out during the entire measuring period exceeding approximately 10 seconds at short intervals with instantaneous values available from the detectors 4, 5 and 11. The mean value of the result of the calculation is displayed at the end of the measuring period.

It is also possible, however, to cause the calculation unit to calculate the mean value of each one of the signals from the detectors 4, 5 and 11 during a period longer than approximately 10 seconds, whereafter the unit carries out the calculation according to equation (4) with the mean values inserted.

When the determination of concentration is to be performed for a substance in particles carried by a flowing medium also containing said substance in solution to an unknown concentration, it is desired that the dissolved substance should not affect the main determination. In order to do this, a modified form of equation (4) is employed and additional measurements performed. When modifying equation (4), the value $I_r$ included in the numerator, is obtained by measuring in a second different radiation wavelength range from that for the measure signals included in the denominator, in which second wavelength range no radiation absorption by the substance to be determined occurs. Even though some of this substance may be dissolved in the carrier liquid, the equation (4) is not affected by such substance dissolved in the sample, because the measure signals included in the denominator in the equation (4) are affected to the same degree by the radiation absorption. This implies that this effect disappears on quotient formation of these signals.

This in its turn implies that lignin dissolved in the liquid does not affect the kappa number measurement and therefore, need not be washed off, either, when the second wavelength range is located in the near IR-range. The sample pretreatment, therefore, is considered simpler.

The signal $I_o$ in the numerator of the equation can in this case either be the measured signal from a reference detector located in the ray path of the adjacent measuring arrangement, or the measured signal $I_r$ in the second wavelength range at clear water calibration. An additional adjacent measuring arrangement is required for measuring in said second wavelength range and is constructed in analogy with Fig. 1: light source - optics - diaphragm - tube - detector - analog-to-digital converter. However, in the additional measuring arrangement the light source emits radiation within the near infrared and is preferably a light-emitting diode, and only a detector corresponding to the detector 4 in Fig. 1 is used. This arrangement is connected with the rest of the system to calculation unit 13, the calculating unit calculating the concentration $konc_A$ of the substance according to the modified equation (4):

$$konc_A = A'' \left\{ \ln \left[ \frac{c''_3 \, ((I_{o2}/I_{r2}) - 1)}{((I_s/I_{r1}) - c''_1)^{c''_2}} \right] \right\}^{1/k''}$$

where $I_{o2}$ is the intensity of the incident radiation within said second wavelength range or the intensity of the radiation within said second wavelength range which is transmitted straight through the medium without any particles therein, $I_{r2}$ is the intensity of the radiation within said second wavelength range which is transmitted straight through the medium, $I_{r1}$ is the intensity of the radiation within the first wavelength range which is transmitted straight through the medium, $I_s$ is the intensity of the detected scattered radiation within the first wavelength range, $k''$ is a constant between 1/2 and 1 selected in dependence on the predetermined detection angle for the scattered radiation, $A''$ is a proportionalization constant, $c''_1$ is a constant dependent on the dimensions of the measuring instrument and established by measurement of clear water giving $c''_1 = I_s/I_r$ (clear water), $c''_2$ is a constant obtained by the measurement of two or more calibration suspensions with the same kappa number but different concentrations of suspended particles and selected so that $konc_A$ is independent of concentration variations of suspended material, and $c''_3$ is a constant selected so that $konc_A = o$ when there is no absorption by suspended particles.

## Claims

1. A method of determining the concentration $konc_A$ of a substance in particles carried by a flowing medium in which the substance does not dissolve, said substance being distributed in varying concentrations within the particles with some other material, the said substance absorbing radiation in a predetermined wavelength range and said other material reflecting radiation in said predetermined range, said method comprising illuminating said medium by means of a radiation source which emits a beam of radiation within the said radiation wavelength range, detecting radiation transmitted through said medium to provide a first signal representing the transmitted intensity $I_r$, and detecting radiation scattered in a predetermined direction which is at an angle to the beam from the source, to provide a second signal representing the scattered intensity $I_s$, characterized in that radiation emitted from said source is detected to provide a third signal representing the intensity $I_{o1}$ of said beam, and in that said first, second and third signals are combined to calculate the concentration $konc_A$ of said substance according to the formula:

$$konc_A = A' \left\{ \ln \left[ \frac{c'_3 ((I_{o1}/I_r) - 1)}{((I_s/I_r) - c'_1)^{c'2}} \right] \right\}^{1/k'}$$

where $I_{o1}$ is the intensity of the incident radiation, $I_r$ is the intensity of the radiation transmitted straight through the medium, $I_s$ is the intensity of the detected scattered radiation, $k'$ is a constant between 1/2 and 1 selected in dependence on the predetermined detection angle for the scattered radiation, $A'$ is a proportionalization constant, $c'_1$

is a constant dependent on the dimensions of the measuring instrument and established by measurement of clear water giving $c'_1 = I_s/I_r$ (clear water), $c'_2$ is a constant obtained by the measurement of two or more calibration suspensions with the same kappa number but different concentrations of suspended particles and selected so that $konc_A$ is independent of concentration variations of suspended particles, and $c'_3$ is a constant selected so that $konc_A = 0$ when there is no absorption by suspended particles.

2. A method of determining the concentration $konc_A$ of a substance in particles carried by a flowing medium also containing said substance in solution to an unknown concentration, said substance being distributed in varying concentrations within the particles with some other material, the said substance absorbing radiation in a first predetermined wavelength range and said other material reflecting radiation in said first predetermined range, said method comprising illumination, said medium by means of a first radiation source which emits a first beam of radiation within the said radiation wavelength range, detecting radiation transmitted through said medium to provide a first siganl representing the transmitted intensity $I_{r1}$, and detecting radiation scattered in a predetermined direction which is at an angle to the first beam to provide a second signal representing the scattered intensity $I_s$, characterized in that: the medium is illuminated by a second radiation source emitting a second beam of radiation within a second wavelength range which is different from the first predetermined wavelength range, in which second wavelength range said substance does not absorb radiation; in that the radiation from the second radiation source transmitted in a direction straight through said medium is detected to provide a third signal $I_{r2}$; in that the intensity of the second source, or the intensity of radiation emitted by said second source and transmitted in a direction straight through said medium in the absence of particles, is detected to provide a fourth signal $I_{o2}$: and in that the first, second, third and fourth signals are combined to calculate $konc_A$ of said substance according to the formula:

$$konc_A = A'' \left\{ 1n \left[ \frac{c''_3((I_{o2}/I_{r2})-1)}{((I_s/I_{r1})-c''_1)^{c''_2}} \right] \right\}^{1/k''}$$

where $I_{o2}$ is the intensity of the incident radiation within said second wavelength range or the intensity of the radiation within said second wavelength range which is transmitted striaght through the medium without any particles therein, $I_{r2}$ is the intensity of the radiation within said second wavelength range which is transmitted straight through the medium, $I_{r1}$ is the intensity of the radiation within the first wavelength range which is transmitted straight through the medium, $I_s$ is the intensity of the detected scattered radiation within the first wavelength range, k'' is a constant between 1/2 and 1 selected in dependence on the predetermined detection angle for the scattered radiation, $A''$ is a proportionalization constant, $c''_1$ is a constant dependent on the dimensions of the measuring instrument and established by measurement of clear water giving $c''_1 = I_s/I_r$ (clear water), $c''_2$ is a constant obtained by the measurement of two or more calibration suspensions with the same kappa number but different concentrations of suspended particles and selected so that $konc_A$ is independent of concentration variations of suspended material, and $c''_3$ is a constant selected so that $konc_A = 0$ when there is no absorption by suspended particles.

3. Apparatus arranged to carry out the method according to claim 1 for determining the concentration $konc_A$ of a substance in particles carried by a flowing medium in which the substance does not dissolve, said substance being distributed in varying concentrations within the particles with some other material, the said substance absorbing radiation in a predetermined wavelength range and said other material reflecting radiation in said predetermined range, said apparatus comprising a radiation source (1) emitting a beam of radiation in said wavelength range, means (3) to contain a flowing medium and positioned for illumination by said beam; a first detector (4) mounted on the axis of said beam on the opposite side of said container means from the source and detecting radiation transmitted through said medium so as to provide a first signal representing the transmitted intensity $I_r$; a second detector (5) mounted to receive radiation scattered by particles in said medium at predetermined angle to the axis of said beam and to provide a second signal representing the scattered intensity $I_s$, and a signal processing unit (13), characterized by: a third detector (11) arranged to detect radiation emitted by said source and to provide a signal representing the intensity $I_{o1}$ incident on the medium and by the signal processing unit being arranged to combine said first, second and third signal so as to calculate the concentration $konc_A$ of said substance in accordance with the formula:

$$konc_A = A' \left\{ 1n \left[ \frac{c'_3((I_{o1}/I_r)-1)}{((I_s/I_r)-c'_1)^{c'_2}} \right] \right\}^{1/k'}$$

where $I_{o1}$ is the intensity of the incident radiation, $I_r$ is the intensity of the radiation transmitted straight through the medium, $I_s$ is the intensity of the detected scattered radiation, k' is a constant between 1/2 and 1 selected in dependence on the predetermined angle for the scattered radiation, $A'$ is a proportionalization constant, $c'_1$ is a constant dependent on the dimensions of the measuring instrument and established by measurement of clear water giving $c'_1 = I_s/I_r$ (clear water), $c'_2$ is a constant obtained by the measurement of two or more calibration suspensions with the same kappa number but different concentrations of suspended particles and selected so that $konc_A$ is independent of concentration variations of suspended particles, and $c'_3$ is a constant selected so that $konc_A = o$ when there is no absorption by suspended particles.

4. Apparatus arranged to carry out the method according to claim 2 for determining the concentration $konc_A$ of a substance in particles carried by a flowing medium also containing said substance in solution to an unknown concentration, said substance being distributed in varying concentrations within the particles with some other material, the said substance absorbing radiation in a first predetermined wavelength range and said other material reflecting radiation in said first predetermined range, said apparatus comprising a first radiation source emitting a beam of radiation in said first wavelength range; means to contain a flowing medium and positioned for illumination by said beam; a first detector mounted on the axis of said first beam on the opposite side of said container means from the first source and detecting radiation transmitted through said medium so as to provide a first signal representing the transmitted intensity $I_{r1}$ in said first wavelength range; a second detector mounted to receive radiation scattered by particles in said medium at a predetermined angle to the axis of said first beam and to provide a second signal representing the scattered intensity $I_s$ in said first wavelength range, and a signal processing unit, characterized by: a second radiation source emitting a second beam of radiation within a second wavelength range different from the first range and in which the dissolved substance does not absorb; by a third detector positioned to receive light from said second radiation source and transmitted straight through said medium and providing a third signal representing the transmitted intensity $I_{r2}$ in said second wavelength range; and by the signal processing unit being arranged to combine said first, second and third signals and a fourth signal representing the intensity of the second source or the intensity of the radiation from said second source transmitted by said medium without any particles therein, so as to calculate the concentration $konc_A$ of said substance in accordance with the formula:

$$konc_A = A'' \left\{ \ln \left[ \frac{c''_3 ((I_{o2}/I_{r2}) - 1)}{((I_s/I_{r1}) - c''_1)^{\ c''_2}} \right] \right\}^{1/k''}$$

wherein $I_{o2}$ is the intensity of the incident radiation within said second wavelength range or the intensity of the radiation within said second wavelength range which is transmitted straight through the medium without any particles therein, $I_{r2}$ is the intensity of the radiation within said second wavelength range which is transmitted straight through the medium, $I_{r1}$ is the intensity of the radiation within said first wavelength range which is transmitted straight

through the medium, $I_s$ is the intensity of the detected scattered radiation within said first wavelength range, $k''$ is a constant between 1/2 and 1 selected in dependence on the predetermined detection angle for the scattered radiation, $A''$ is a proportionalization constant, $c''_1$ is a constant dependent on the dimensions of the measuring instrument established by measurement of clear water giving $c''_1 = I_s/I_r$ (clear water), $c''_2$ is a constant obtained by the measurement of two or more calibration suspensions with the same kappa number but different concentrations of suspended particles and selected so that $konc_A$ is independent of concentration variations of the suspended material, and $c''_3$ is a constant selected so that $konc_A = o$ when there is no absorption by suspended particles.

5. Apparatus as defined in Claim 3 or 4 for measuring the lignin content in cellulose fibres, characterized in that the radiation from the first-mentioned radiation source lies within the ultraviolet radiation range, and the radiation source preferably is a mercury lamp.

6. Apparatus as defined in claim 4 for measuring the lignin content in cellulose fibres, characterized in that the second radiation source emits radiation within the near infrared range and that it preferably is a light emitting diode.

7. Apparatus as defined in claim 4, characterized in that a reference detector is provided to detect the intensity $I_{o2}$ for the light from the second source incident or the medium.

8. Method as defined in claim 1 or 2, characterized in that the calculation involves utilization of mean intensities ascertained during a period exceeding approximately 10 seconds.

9. A method as defined in claim 1 or 2, characterized in that during a period exceeding approximately 10 seconds many calculations utilizing the instantaneous values from each detector are performed and the mean values thereof are calculated.

10. Apparatus as defined in claim 3, characterized in that a diaphragm (21) is located between the flowing medium and the first and second detectors (4, 5), which diaphragm is designed so that for both small and large particles the ratio of the increase of the signal from the detector (5), which detects light scattered by the particles, to the decrease of the signal from the detector (4), which detects transmitted radiation, is equal.

11. Apparatus as defined in claim 10, characterized in that the diaphragm (21) is approximately fan-shaped and located with its pointed portion so that the transmitted radiation passes near the pointed portion, and the radiation scattered by the particles passes near the wider portion of the diaphragm.

12. Apparatus as defined in claim 11, characterized in that the top angle ($\gamma$) of the diaphragm is adjustable.

13. Apparatus as defined in claim 4, characterized in that a turbulence former is located so as to cause the medium to flow with a high degree of turbulence through the measuring position.

## Patentansprüche

1. Verfahren zur Bestimmung der Konzentration $konc_A$ einer Substanz in von einem strömenden Medium getragenen Partikeln, worin die Substanz nicht aufgelöst wird, wobei die Substanz in verschiedenen konzentrationen in den Partikeln mit einem anderen Material verteilt ist und in einem vorausbestimmten Wellenbereich Strahlung absorbiert und das andere Material im vorausbestimmten Bereiche Strahlung reflektiert, und wobei das Verfahren Beleuchtung des Mediums mittels einer Strahlungsquelle, die ein Strahlenbündel im Wellenbereiche aussendet, Entdeckung der durch das Medium überführten Strahlung, un ein erstes, die überführte Intensität $I_r$ vertretendes Signal vorzusehen, und Entdeckung zerstreuter Strahlung in einer vorausbestimmten Richtung, die einen Winkel mit dem Strahl von der Quelle bildet, um ein zweites, die zerstreute Intensität $I_c$ vertretendes Signal vorzusehen, umfasst, dadurch gekennzeichnet, dass die von der Quelle ausgesandte Strahlung entdeckt wird, un ein drittes Signal vorzusehen, das die Intensität $I_{o1}$ des erwähnten Strahls vertritt, und dass ein erstes, zweites und drittes Signal kombiniert werden, um die Konzentration $konc_A$ der erwähnten Substanz gemäss der Formel

$$konc_A = A'\left\{1n\left[\frac{c'_3((I_{o1}/I_r)-1)}{((I_s/I_r)-c'_1)^{c'_2}}\right]\right\}^{1/k'}$$

zu berechnen, worin $I_{o1}$ die Intensität der auftreffenden Strahlung ist, $I_r$ die Intensität der quer durch das Medium überführten Strahlung ist, $I_s$ die Intensität der entdeckten zerstreuten Strahlung ist, $k'$ eine Konstante zwischen 1/2 und 1 ist, die abhängig von dem vorausbestimmten Entdeckungswinkel der zerstreuten Strahlung gewählt ist, $A'$ eine Proportionalitätskonstante ist, $c'_1$ eine Konstante ist, die von den Abmessungen des Messinstruments abhängig ist und durch Messung von Klarwasser, was $c'_1 = I_s/I_r$ (Klarwasser) gibt, festgestellt ist, $c'_2$ eine Konstante ist, die durch Messung von zwei oder mehr Kalibrierungssuspensionen mit derselben Kappanummer aber verschiedenen Konzentrationen von suspendierten Partikeln erhalten und derart gewählt ist, dass $konc_A$ von den Konzentrationsvariationen suspendierter Partikeln unabhängig ist, und $c'_3$ eine Konstante ist, die gewählt ist, so dass $konc_A = o$ ist, wenn es keine Absorption von suspendierten Partikeln gibt.

2. Verfahren zur Bestimmung der Konzentration $konc_A$ einer Substanz in von einem strömenden Medium getragenen Partikeln, welches Medium auch die Substanz in einer Lösung von einer unbekannten Konzentration enthält, wobei die Substanz in verschiedenen Konzentrationen in den Partikeln mit einem anderen Material verteilt ist, und Strahlung in einem ersten vorausbestimmten Wellenbereich absorbiert und das andere Material im ersten vorausbestimmten Bereiche Strahlung reflektiert, und wobei das Verfahren Beleuchtung des erwähnten Mediums mittels einer ersten Strahlungsquelle, die ein erstes Strahlenbündel im ersten Wellenbereiche aussendet, Entdeckung der durch das Medium überführten Strahlung, um ein erstes, die überführte Intensität $I_{r2}$ vertretendes Signal vorzusehen und Entdeckung zerstreuter Strahlung in einer vorausbestimmten Richtung, die einen Winkel mit dem ersten Strahl bildet, um ein zweites, die zerstreute Intensität $I_s$ vertretendes Signal vorzusehen, umfasst, dadurch gekennzeichnet, dass das Medium von einer zweiten Strahlungsquelle beleuchtet wird, die ein zweites Strahlenbündel in einem zweiten Wellenbereich aussendet, der vom ersten vorausbestimmten Wellenbereich verschieden ist, in welchem zweiten Wellenbereich die erwähnte Substanz keine Strahlung absorbiert, dass die Strahlung von der zweiten Strahlungsquelle, die in einer Richtung quer durch das erwähnte Medium überführt wird, entdeckt wird, um eine drittes Signal $I_{r2}$ vorzusehen, dass die Intensität der zweiten Quelle, oder die Intensität der von der zweiten Quell ausgesandten Strahlung, welche in einer Richtung quer durch das erwähnte Medium in Abwesenheit der Partikeln überführt wird, entdeckt wird, um ein viertes Signal $I_{o2}$ vorzusehen, und dass das erste, dritte und vierte Signal kombiniert werden, um $konc_A$ der Substanz gemäss der Formel

$$konc_A = A''\left[1n\left\{\frac{c''_3((I_{o2}/I_{r2})-1)}{((I_s/I_{r1})-c''_1)^{c''_2}}\right\}\right]^{1/k''}$$

zu berechnen, worin $I_{o2}$ die Intensität der auftreffenden Strahlung im zweiten Wellenbereich oder die Intensität der Strahlung im zweiten Wellenbereich ist, die quer durch das Medium ohne einige Partikeln darin überführt wird, $I_{r2}$ die Intensität der Strahlung im zweiten Wellenbereich ist, die quer durch das Medium überfhürt wird, $I_{r1}$ die Intensität der Strahlung im ersten Wellenbereich ist, die quer durch das Medium überführt wird, $I_s$ die Intensität der entdeckten zerstreuten Strahlung im ersten Wellenbereich ist, $k''$ eine Konstante zwischen 1/2 und 1 ist, die abhängig von dem vorausbestimmten Endeckungswinkel der zerstreuten Strahlung gewählt ist, $A''$ eine Proportionalitätskonstante ist, $c''_1$ eine Konstante ist, die von den Abmessungen des Messinstruments abhängig ist und durch Messung des Klarwassers, was $c''_1 = I_s/I_r$ (Klarwasser) gibt, festgestellt ist, $c''_2$ eine Konstante ist, die durch Messung von zwei oder mehr Kalibrierungssuspensionen mit derselben Kappanummer aber verschiedenen Konzentrationen von suspendierten Partikeln erhalten ist und derart gewählt ist, dass $konc_A$ von den Konzentrationsvariationen suspendierten Materials unabhängig ist, und $c''_3$ eine Konstante ist, die derart gewählt ist, dass $konc_A=o$, wenn es keine Absorption von suspendierten Partikeln gibt.

3. Apparat, der angeordnet ist, das Verfahren gemäss Anspruch 1 durchzuführen, das die Konzentration $konc_A$ einer Substanz in von einem strömenden Medium getragenen Partikeln bestimmen soll, worin die Substanz nicht aufgelöst wird, wobei die Substanz in variierenden Konzentrationen in den Partikeln mit einem anderen Material verteilt ist und Strahlung in einem vorausbestimmten Wellenbereich absorbiert, und das andere Material Strahlung in dem vorausbestimmten Bereiche reflektiert, wobei der erwähnte Apparat eine Strahlungsquelle (1), die ein Strahlenbündel in dem Wellenbereich aussendet, Behältermittel (3) für ein strömendes Medium und placiert, so dass es von dem erwähnten Bündel beleuchtet wird, einen ersten Detektor (4), der auf der Achse des erwähnten Bündels auf der engegengesetzten Seite des Behälters von der Quelle gesehen montiert ist und Strahlung entdeckt, die durch das erwähnte Medium überführt wird, so dass ein erstes, die überführte Intensität $I_r$ vertretendes Signal gebildet wird, einen zweiten Detektor (5), der derart montiert ist, von Partikeln zerstreute Strahlung im Medium bei einem zur Achse des Bündels vorausbestimmten Winkel zu empfangen und ein Signal abzugeben, das die zerstreute Intensität $I_s$ vertritt, und eine Signalverarbeitungsanlage (13) umfasst, gekennzeichnet durch einen dritten Detektor (11), der angeordnet ist, von der Quelle ausgesandte Strahlung zur entdecken und ein signal abzugeben, das die auf das Medium auftreffende Intensität $I_{o1}$ vertritt, und dadurch, dass die Signalverarbeitungsanlage derart angeordnet ist, dass das erste, zweite und dritte Signal kombiniert werden, um die Konzentration $konc_A$ der Substanz gemäss der Formel

$$konc_A = A' \left\{ \ln \left[ \frac{c'_3((I_{o1}/I_r)-1)}{((I_s/I_r)-c'_1)^{c'_2}} \right] \right\}^{1/k'}$$

zu berechnen, worin $I_{o1}$ die Intensität der auftreffenden Strahlung ist, $I_r$ die Intensität der quer durch das Medium überführten Strahlung ist, $k'$ eine Konstante zwischen 1/2 und 1 ist, die abhängig von dem vorausbestimmten Winkel der zerstreuten Strahlung gewählt ist, $A'$ eine Proportionalitätskonstante ist, $c'_1$ eine von den Abmessungen des Messinstruments abhängige Konstante ist, die durch Messung von Klarwasser, was $c'_1=I_s/I_r$ (Klarwasser) gibt, festgestellt ist, $c'_2$ eine Konstante ist, die durch Messung von zwei oder mehr Kalibrierungssuspensionen mit derselben Kappanummer aber verschiedenen Konzentrationen suspendierter Partikeln erhalten ist, und derart gewählt ist, dass $konc_A$ von den Konzentrationsvariationen suspendierten Partikeln unabhängig ist, und $c'_3$ eine Konstante

ist, die derart gewählt ist, dass $konc_A=o$, wenn es keine Absorption von suspendierten Partikeln gibt.

4. Apparat, der angeordnet ist, das Verfahren gemäss Anspruch 2 durchzuführen, das die Konzentration $konc_A$ einer Substanz in von einem strömenden Medium getragenen Partikeln bestimmen soll, welches Medium auch die Substanz in einer Lösung von unbekannter Konzentration enthält, wobei die Substanz in variierenden Konzentrationen in den Partikeln mit einem anderen Material verteilt ist und Strahlung in einem vorausbestimmten Wellenbereich absorbiert und das andere Material Strahlung in dem ersten vorausbestimmten Bereiche reflektiert und wobei der Apparat eine erste Strahlungsquelle, die ein Strahlenbündel in dem ersten Wellenbereich aussendet, ein strömendes Medium enthaltendes Mittel, das angeordnet ist, vom Bündel beleuchtet zu werden, einen ersten Detektor, der auf der Achse des ersten Bündels auf der dem Behältermittel entgegengesetzten Seite von der ersten Quelle gesehen montiert ist und durch das erwähnte Mittel überführte Strahlung entdeckt, um ein erstes Signal vorzusehen, das die überführte Intensität $I_{r1}$ im ersten Wellenbereich vertritt, einen zweiten Detektor, der angeordnet ist, von Partikeln zerstreute Strahlung im erwähnten Medium bei einem vorausbestimmten Winkel zur Achse des ersten Bündels zu empfangen und ein zweites Signal vorzusehen, das die zerstreute Intensität $I_s$ im ersten Wellenbereich vertritt, und eine Signalverarbeitungsanlage umfasst, gekennzeichnet durch eine zweite Strahlungsquelle, die ein zweites Strahlenbündel in einem zweiten vom ersten Bereiche verschiedenen Wellenbereich aussendet und worin die aufgelöste Substanz nicht absorbiert, durch einen dritten Detektor, der angeordnet ist, von der zweiten Strahlungsquelle empfangenes und quer durch das Medium überführtes Licht zu empfangen und ein drittes Signal vorzusehen, das die überführte Intensität $I_{r2}$ im zweiten Wellenbereich vertritt, und durch die Anordnung der Signalverarbeitungsanlage, so dass das erste, zweite und dritte Signal und ein viertes Signal kombiniert werden, die die Intensität der zweiten Quelle oder die Intensität der Strahlung von der ersten, durch das Medium überführte Medium ohne einige Partikeln darin vertreten, um die Konzentration $konc_A$ der Substanz gemäss der Formel

$$konc_A = A'' \left\{ \ln \left[ \frac{c''_3((I_{o2}/I_{r2})-1)}{((I_s/I_{r1})-c''_1)^{c''_2}} \right] \right\}^{1/k''}$$

zu berechnen, worin $I_{o2}$ die Intensität der auftreffenden Strahlung im zweiten Wellenbereich oder die Intensität der Strahlung im zweiten Wellenbereich ist, die quer durch das Medium ohne Partikeln darin überführt wird, $I_{r2}$ die Intensität der Strahlung im zweiten Wellenbereiche ist, die quer durch das Medium überführt wird, $I_{r1}$ die Intensität der Strahlung im ersten Wellenbereich ist, quer durch das Medium überführt wird, $I_s$ die Intensität der entdeckten zerstreuten Strahlung im ersten Wellenbereich ist, k″ eine Konstante zwischen 1/2 und 1 ist, die abhängig von dem vorausbestimmten Entdeckungswinkel der zerstreuten Strahlung gewählt ist, A″ eine Proportionalitätskonstante ist, $c''_1$ eine Konstanteist, die abhängig von den Abmessungen des Messinstruments ist und durch Messung von Klarwasser, was $c''_1 = I_s/I_r$ (Klarwasser) gibt, bestimmt ist, $c''_2$ eine Konstante ist, die durch Messung von zwei oder mehr Kalibrierungssuspensionen mit derselben Kappanummer aber verschiedenen Konzentrationen von suspendierten Partikeln erhalten ist und derart gewält ist, dass $konc_A$ von den Konzentrationsvariationen des suspendierten Materials unabhängig ist, und $c''_3$ eine Konstante ist, die derart gewählt ist, dass $konc_A = o$, wenn es keine Absorption von suspendierten Partikeln gibt.

5. Apparat nach Anspruch 3 oder 4 zur Messung des Lignininhalts in Zellulosefasern, dadurch gekennzeichnet, dass die Strahlung von der Strahlungsquelle binnen dem ultravioletten Strahlungsbereich liegt und die Strahlungsquelle vorzugsweise eine Queksilberlampe ist.

6. Apparat nach Anspruch 4 zur Messung des Lignininhalts in Zellulosefasern, dadurch gekennzeichnet, dass die zweite Strahlungsquelle Strahlung binnen dem nahen Infrarotbereiche aussendet und dass sie vorzugsweise eine lichtaussendende Diode ist.

7. Apparat nach Anspruch 4, dadurch gekennzeichnet, dass ein Bezugsdetektor angeordnet ist, die Intensität $I_{o2}$ des Lichtes von der zweiten auftreffenden Quelle oder dem Medium zu entdecken.

8. Verfahren nach einem der Ansprüche 1 oder 2, dadurch gekennzeichnet, dass die Rechenanlage die Berechnung durch Anwendung Mittelintensitäten durchführt, die während einer Periode von mehr als etwa 10 Sekunden ermittelt werden.

9. Verfahren nach Anspruch 1 oder 2, dadurch gekennzeichnet, dass die Rechenanlage während einer Periode von mehr als etwa 10 Sekunden viele Berechnungen durch Anwendung Momentanwerte von jedem Detektor durchführt und die Mittelwerte davon berechnet.

10. Anordnung nach Anspruch 3, dadurch gekennzeichnet, dass eine Membran zwischen dem strömenden Medium und den Detektoren angeordnet ist, welche derart ausgebildet ist, dass für sowohl kleine als auch grosse Partikeln das Verhältnis zwischen der Erhöhung des Signals vom Detektor, der von Partikeln zerstreutes Licht entdeckt, und der Verminderung des Signals vom Detektor, der überführte Strahlung entdeckt, gleich ist.

11. Anordnung nach Anspruch 10, dadurch gekennzeichnet, dass die Membran etwa fächerförmig und mit ihrem spitzen Teil derart placiert ist, dass die überführte Strahlung nahe am spitzen Teile passiert, und die von den Partikeln zerstreute Strahlung nahe am breiteren Teile der Membran passiert.

12. Anordnung nach Anspruch 11, dadurch gekennzeichnet, dass der Brustwinkel der Membran justierbar ist.

13. Anordnung nach Anspruch 4, dadurch gekennzeichnet, dass ein turbulenzbildendes Organ derart placiert ist, dass es das Medium dazu bringt, mit einem hohen Grand von Trubulenz an der Messtelle vorbeizuströmen.

## Revendications

1. Procédé pour déterminer la concentration $konc_A$ d'une substance dans des particules entraînées par un fluide en écoulement dans lequel la substance ne se dissout pas, ladite substance étant distribuée à des concentrations variables dans les particules avec un autre matière, ladite substance absorbant un rayonnement à une gamme de longueurs d'onde prédéterminée et ladite autre matière réfléchissant le rayonnement dans ladite gamme prédéterminée, ledit procédé consistant à éclairer ledit fluide au moyen d'une source de rayonnement qui émet un faisceau de rayonnement dans ladite gamme de longueurs d'onde de rayonnement, à détecter le rayonnement transmise à travers ledit fluide pour produire un premier signal représentant l'intensité transmise $I_r$, et à détecter le rayonnement dispersé dans une direction prédéterminée qui est à un angle par rapport au faiscau de la source, pour donner un second signal représentant l'intensité dispersée $I_s$, caractérisé en ce que le rayonnement émis par ladite source est détecté pour produire un troisième signal représentant l'intensité $I_{o1}$ dudit faisceau, et en ce que lesdit premier, second et troisième signaux sont combinés pour calculer la concentration $konc_A$ de ladite substance selon la formule:

$$konc_A = A'\left\{1n\left[\frac{c'_3((I_{o1}/I_r)-1)}{((I_s/I_r)-c'_1)^{c'_2}}\right]\right\}^{1/k'}$$

dans laquelle $I_{o1}$ est l'intensité du rayonnement incident, $I_r$ est l'intensité du rayonnement transmis directement à travers le fluide, $I_s$ est l'intensité du rayonnement dispersé détecté, k' est une constante entre 1/2 et 1 choisie selon l'angle prédéterminé de détection pour le rayonnement dispersé, A' est un constante de proportionalisation, $c'_1$ est une constante dépendant des dimensions de l'instrument de mesure et établie par mesure dans l'eau claire pour donner $c'_1 = I_s/I_r$ (eau claire), $c'_2$ est une constante obtenue par la mesure de deux ou plusieurs suspensions de calibrage avec le même indice de kappa mais à des concentrations différentes des particules en suspension et choisies de façon que $konc_A$ soit indépendante des variations de concentration des particules en suspension, et $c'_3$ est und constante choisie de façon que $konc_A=o$ lorsqu'il n'y a pas d'absorption par les particules en suspension.

2. Procédé pour déterminer la concentration $konc_A$ d'une substance dans des particules entraînées par un fluide en écoulement contenant également ladite substance en solution à une concentration inconnue, ladite substance étant distribuée à des concentrations variables dans les particules avec une autre matière, ladite substance absorbant un rayonnement dans une première gamme de longueurs d'onde prédéterminée et ladite autre matière réfléchissant le rayonnement dans ladite première gamme prédéterminée, ledit procédé comprenant l'éclairement dudit fluide au moyen d'une première source de rayonnement qui émet un premier faisceau de rayonnement dans ladite première gamme de longueurs d'onde de rayonnement, la détection du rayonnement transmis à travers ledit fluide pour produire un premier signal représentatif de l'intensité transmise $I_{r1}$, et la détection du rayonnement dispersé dans une direction prédéterminée qui est à un angle par rapport au premier faisceau pour produire un second signal représentant l'intensité dispersée $I_s$, caractérisé en ce que: le fluide est éclairé par une seconde source de rayonnement émettant un second faisceau de rayonnement dans une seconde gamme de longueurs d'onde qui est différente de la première gamme de longueurs d'onde prédéterminée, gamme de longueurs d'onde dans laquelle ladite substance n'absorbe pas le rayonnement, en ce que le rayonnement de la seconde source de rayonnement transmis dans une direction directement à travers ledit fluide est détecté pour produire un troisième signal $I_{r2}$;

en ce que l'intensité de la seconde source, ou l'intensité du rayonnement émis par ladite seconde source et transmis dans une direction à travers ledit fluide en l'absence de particules est détectée pour produire un quatrième signal $I_{o2}$: en en ce que les premier, second, troisième et quatrième signaux sont combinés pour calculer $konc_A$ de ladite substance selon la formule:

$$konc_A=A''\left\{1n\left[\frac{c''_3((I_{o2}/I_{r2})-1)}{((I_s/I_{r1})-c''_1)^{c''_2}}\right]\right\}^{1/k''}$$

dans laquelle $I_{o2}$ est l'intensité du rayonnement incident dans ladite seconde gamme des longueurs d'onde ou l'intensité du rayonnement dans ladite seconde gamme des longueurs d'onde qui est transmis directement à travers le fluide sans aucune particule, $I_{r2}$ est l'intensité du rayonnement dans ladite seconde gamme de longueurs d'onde qui est transmis directement à travers le fluide, $I_{r1}$ est l'intensité du rayonnement dans la première gamme de longueurs d'onde qui est transmis directement à travers le fluide, $I_s$ est l'intensité du rayonnement dispersé détecté dans la première gamme de longueurs d'onde, $k''$ est une constante entre 1/2 et 1 choisie selon l'angle prédéterminé de détection pour le rayonnement dispersé, $A''$ est une constante de proportionnalisation, $c''_1$ est une constante qui dépend des dimensions de l'instrument de mesure et établie par mesure de l'eau claire, donnant $c''_1=I_s/I_r$ (eau claire), $c''_2$ est une constante obtenue par la mesure de deux suspensions de calibrage ou plus ayant le même indice de kappa mais ayant des concentrations différentes des particules en suspension et choisie de façon que $konc_A$ soit indépendante des variations de concentration de la matière en suspension, et $c''_3$ est une constante choisie de façon que $konc_A=o$ lorsqu'il n'y a pas d'absorption par les particules en suspension.

3. Dispositif agencé pour la mise en oeuvre du procédé selon la revendication 1 pour déterminer la concentration $konc_A$ d'une substance dans des particules entraînées par un fluide en écoulement où la substance ne se dissout pas, ladit substance étant distribuée à des concentrations variables dans les particules avec une autre matière, ladite substance absorbant un rayonnement à une gamme de longueurs d'onde prédéterminée et ladite autre matière réfléchissant le rayonnement dans ladite gamme prédéterminée, ledit dispositif comprenant une source de rayonnement (1) émettant un faisceau de rayonnement dans ladite gamme de longueurs d'onde, un moyen (3) pour contenir un fluide en écoulement et placé pour un éclairement par ledit faisceau; un premier détecteur (4) monté sur l'axe dudit faisceau sur le côté opposé dudit moyen formant récipient par rapport à la source et détectant la rayonnement transmis à travers ledit fluide de façon à produire un premier signal représentatif de l'intensité transmise $I_r$; un second détecteur (5) monté pour recevoir le rayonnement dispersé par les particules dans ledit fluide à un angle prédéterminé par rapport à l'axe dudit faisceau et pour produire un second signal représentant l'intensité dispersée $I_s$, et une unité de traitement de signaux (13), caractérisé par: un troisième détecteur (11) agencé pour détecter le rayonnement émis par ladite source et pour produire un signal représentant l'intensité $I_{o1}$ incidente sur le fluide et par l'unité de traitement de signaux qui est agencée pour combiner lesdits premier, second et troisième signaux afin de calculer la concentration $konc_A$ de ladite substance selon la formule:

$$konc_A=A'\left\{1n\left[\frac{c'_3((I_{o1}/I_r)-1)}{((I_s/I_r)-c'_1)^{c'_2}}\right]\right\}^{1/k'}$$

où $I_{o1}$ est l'intensité du rayonnement incident, $I_r$ est l'intensité du rayonnement transmis directement à travers le fluide, $I_s$ est l'intensité du rayonnement dispersé détecté, $k'$ est une constante entre 1/2 et 1 choisie selon l'angle prédéterminé pour le rayonnement dispersé, $A'$ est une constante de proportionnalisation, $c'_1$ est une constante qui dépend des dimensions de l'instrument de mesure et qui est établie par la mesure de l'eau claire donnant $c'_1=I_s/I_r$ (eau claire), $c'_2$ est une constante obtenue par la mesure de deux suspensions de calibrage ou plus ayant le même indice de kappa mais des concentrations différentes des particules en suspension et choisie de façon que $konc_A$ soit indépendante des variations de concentration des particules en suspension, et $c'_3$ est une constante choisie de façon que $konc_A = o$ lorsqu'il n'y a pas d'absorption par les particules en suspension.

4. Dispositif agencé pour la mise en oeuvre du procédé selon la revendication 2 pour déterminer la concentration $konc_A$ d'une substance dans des particules entraînées par un fluide en écoulement contenant également ladite substance en solution à une concentration inconnue, ladite substance étant distribuée à des concentrations variables dans les particules avec une autre matière, ladite substance absorbant le rayonnement dans une première gamme de longueurs d'onde prédéterminée et ladite autre matière réfléchissant le rayonnement dans ladite gamme prédéterminée, ledit dispositif comprenant une première source de rayonnement émettant un faisceau de rayonnement dans ladite première gamme de longueurs d'onde; un moyen pour contenir un fluide en écoulement et placé pour un éclairement par ledit faisceau; un premier détecteur monté sur l'axe dudit premier faisceau sur les côtés opposés dudit moyen formant récipient par rapport à la première source et détectant le rayonnement transmis à travers ledit fluide afin de produire un premier signal représentant l'intensité transmise $I_{r1}$ dans ladite première gamme de longueurs d'onde; un second détecteur monté pour recevoir le rayonnement dispersé par des particules dans ledit fluide à un angle prédéterminé par rapport à l'axe dudit premier faisceau et pour produire un second signal représentant l'intensité dispersée $I_s$ dans ladite première gamme de longueurs d'onde, et une unité de traitement de signaux, caractérisé par: une seconde source de rayonnement émettant un second faisceau de rayonnement dans une seconde gamme de longueurs d'onde différente de la première gamme et où la substance dissoute n'absorbe pas; par un troisième détecteur placé pour recevoir la lumière de ladite seconde source de rayonnement et transmise directement à travers ledit fluide et produisant un troisième signal représentant l'intensité transmise $I_{r2}$ dans ladite seconde gamme de longueurs d'onde; et par l'unité de traitement de signaux agencée pour combiner lesdits premier, second et troisième signaux et un quatrième signal représentant l'intensité de la seconde source ou l'intensité du rayonnement de ladite seconde source transmis par ledit fluide sans aucune particule, afin de calculer la concentration $konc_A$ de ladite substance selon la formule:

$$konc_A = A'' \left\{ 1n \left[ \frac{c''_3((I_{o2}/I_{r2}) - 1)}{((I_s/I_{r1}) - c''_1)^{c''_2}} \right] \right\}^{1/k''}$$

où $I_{o2}$ est l'intensité du rayonnement incident dans ladite seconde gamme de longueurs d'onde ou l'intensité du rayonnement dans ladite seconde gamme de longueurs d'onde qui est transmis directement à travers le fluide sans aucune particule, $I_{r2}$ est l-intensité du rayonnement dans ladite seconde gamme de longueurs d'onde qui est transmis directement à travers le fluide, $I_{r1}$ est l'intensité du rayonnement dans ladite première gamme de longueurs d'onde qui est transmis directement à travers le fluide, $I_s$ est l'intensité du rayonnement dispersé détecté dans ladite première gamme de longueurs d'onde, $k''$ est une constante entre 1/2 et 1 choisie selon l'angle prédéterminé de détection pour le rayonnement dispersé, $A''$ est une constante de proportionnalisation, $c''_1$ est une constante qui dépend des dimensions de l'instrument de mesure et qui est établie en mesurant l'eau claire pour donner $c''_1 = I_s/I_r$ (eau claire), $c''_2$ est une constante obtenue par la mesure de deux ou plusieurs suspensions de calibrage avec le même indice de kappa mais à des concentrations différentes des particules en suspension et choisie de façon que $konc_A$ soit indépendante des variations de concentration de la matière en suspension, et $c''_3$ est une constante choisie de façon que $konc_A = o$ lorsqu'il n'y a pas d'absorption par des particules en suspension.

5. Dispositif selon la revendication 3 ou 4 pour mesurer la teneur en lignine dans des fibres de cellulose caractérisé en ce que le rayonnement de la source de rayonnement se trouve dans la gamme du rayonnement ultraviolet et la source de rayonnement est de préférence une lampe à mercure.

6. Dispositif selon la revendication 4 pour mesurer la teneur en lignine dans des fibres de cellulose, caractérisé en ce que la seconde source de rayonnement émet un rayonnement dans la gamme proche de l'infrarouge et en ce que c'est de préférence une diode photo-émettrice.

7. Dispositif selon la revendication 4 caractérisé en ce qu'un détecteur de référence est prévu pour détecter l'intensité $I_{o2}$ pour la lumière de la seconde source incidente sur le fluide.

8. Procédé selon la revendication 1 ou 2 caractérisé en ce que l'unité de calcul effectue le calcul en utilisant des intensités moyennes déterminées pendant une péroide dépassant environ 10 secondes.

9. Procédé selon les revendications 1 ou 2, caractérisé en ce que l'unité de calcul pendant une période dépassant environ 10 secondes effectue de nombreux calculs en utilisant les valeurs instantanées de chaque détecteur et en calcule les valeurs moyennes.

10. Dispositif selon la revendication 3 caractérisé en ce qu'une membrane est placée entre le fluide en écoulement et les détecteurs, laquelle membrane est conçue de façon qu'aussi bien pour de petites que pour de grandes particules, le rapport de l'augmentation du signal du détecteur, qui détecte la lumière dispersée par les particules, à la diminution du signal du détecteur qui détecte le rayonnement transmis, soit égal.

11. Dispositif selon la revendication 10 caractérisé en ce que la membrane est à peu près en forme d'éventail et est placée avec sa partie en pointe de façon que le rayonnement transmis passe près de la partie en pointe, et le rayonnement dispersé par les particules passe près de la partie plus large de la membrane.

12. Dispositif selon la revendication 11 caractérisé en ce que l'angle au sommet de la membrane est réglable.

13. Dispositif selon la revendication 4 caractérisé en ce qu'un formeur de turbulence est placé afin de forcer le fluide à s'écouler à un degré élevé de turbulence à travers la position de mesure.

# FIG.1

# FIG.2

# FIG.3